# EUROPEAN PATENT SPECIFICATION

(11) **EP 1 679 231 B1**
(45) Date of publication and mention of the grant of the patent: **03.01.2007**
(21) Application number: 05109802.8
(22) Date of filing: 25.02.2003
(51) Int. Cl.: B60R 9/10

(54) **Luggage carrier for vehicle**
GEPÄCKTRÄGER FÜR EIN FAHRZEUG
Porte-babages pour véhicule

(30) Priority: 28.02.2002 IT MO20020051
(43) Date of publication of application: 12.07.2006
(62) Divisional of application: 03706570.3
(73) Proprietor: F.LLI MENABO' S.R.L., 42025 Cavriago (IT)
(72) Inventor: Menabo', Domenico, 42025, Cavriago (RE) (IT)
(74) Representative: Luppi, Luigi

(56) References cited:
- EP-A- 0 985 582
- FR-A- 2 668 435
- US-A- 4 428 516

## Description

The invention relates to a luggage carrier for vehicles, i.e. a device suitable for receiving loads, preferably applicable to the rear portion of the aforesaid vehicles at a door or a boot lid, provided with an adjusting system that enables said luggage carrier to conform to vehicles with different sizes and shapes.

The rear luggage carriers available at present substantially differ one from the other on the basis of the technical solutions chosen for adapting a same luggage carrier to the plurality of shapes and sizes of the attachment regions of the vehicles generally available on the market.

Examples of such solutions are disclosed in the International Patent Applications WO 97/30870 e WO 00/76809.

In WO 97/30870 there is proposed a device for modifying the length of the luggage carrier comprising a deformable arm fixed to the lower portion of a frame body of the luggage carrier; a screw adjusting system enables to elastically deform the deformable arm and mutually vary the distance between said arm and said lower portion so as to enable an anchoring portion of said deformable arm to engage itself with the corresponding edge of a vehicle hatchback.

Such luggage carrier shows the disadvantage that, during mounting or dismounting, the screw adjusting system results positioned between the frame body and the lower edge of the hatchback and thus lies at a very uncomfortable position for being reached by the user.

In WO 00/76809 there is instead proposed a luggage carrier comprising frame sections mutually connected by means of telescopic tubes; in this case, by causing the frame sections to telescopically slide one into the other, a variation in the length of the luggage carrier is obtained that enables hook portions of opposite ends of each section to engage with corresponding edge portions of the hatchback.

During the mounting and dismounting steps, the user is requested to apply a certain force for causing the sections to mutually slide as well as for blocking said sections in the desired position by means of a lever closing device, that results in a clear disadvantage.

Luggage carriers for bicycle are further known comprising a frame including a first frame part and a second frame part hinged each other.

The first frame part ends downward in a pair of resting elements designed for being positioned on the rear bumper of the vehicle.

In a middle section of the second frame part there is further hinged a bracket for resting on the rear window of the vehicle, or on the cowling of the rear boot.

At the top of the second frame part there is hinged a rack for supporting the bicycles.

In order to fix the luggage carrier to the vehicle, said luggage carrier must be anchored by means of a plurality of belts that must be properly stretched by the operator one at a time.

Before the belts are stretched, by acting on the hinges arranged between the first and the second part and between the latter and the resting bracket, the respective frame parts must be articulated so that the resting elements and the resting bracket are properly positioned on the prescribed portions of the vehicle.

In addition, by always manually acting, it is necessary to operate on the hinge interposed between the second frame part and the rack in order that the latter is brought in a substantially horizontal position so as to bear the load in proper position.

A drawback of such luggage carriers results in that, the frame parts must be mutually oriented manually by the operator, that therefore must perform a number of manual operations in order to arrange the luggage carrier for the proper mounting position.

In addition, fixing the luggage carrier turns out rather labour intensive, since it is necessary to act singularly on the various belts, that implies a remarkable waste of time and energies. FR 266 8435 discloses an apparatus according to the preamble of claim 1.

An object of the present invention is to improve the luggage carriers for vehicles.

A further object is to provide the user with a luggage carrier that can be easily mounted and removed from a vehicle.

Another object is to provide a luggage carrier equipped with a driving device for mounting on, and removing from, a vehicle that is easy to be reached.

Another further object is to simplify the manual operation required to the user when fitting the luggage carrier on the sizes and shapes of the vehicle whereon it is mounted.

A still further object is to reduce the need for operating on a plurality of belts in order to mount, or to remove, a luggage carrier.

According to the invention, an apparatus is provided as defined in claim 1.

In an embodiment, the configuration varying means comprises at least one screw tie rod with sleeve.

Having provided the configuration varying means in conjunction with the hinge means enables to obtain that the geometric configuration of the frame body is adjusted by only acting on the configuration varying means, i.e. without having to operate on the individual position of the first frame body and the second frame body.

The configuration varying means enables the luggage carrier to be fitted on a plurality of vehicles showing different shapes and sizes.

In order to modify the length of the apparatus it is sufficient to act on a knob connected with an external end portion of the screw tie rod, which external end portion is arranged in a position easy to be reached.

It follows that the manual operation required to the user is substantially made easier than in other models of known luggage carriers.

In another embodiment, the configuration varying means comprises two screw tie rods with sleeve, laterally arranged on the first frame body and the second frame body, which enable the luggage carrier to adopt a more stable configuration in the case that the luggage carrier has to be mounted, for any reason, in asymmetric position on the vehicle.

The invention can be better understood with reference to the enclosed drawings, that illustrate some exemplifying and not limitative embodiments thereof, wherein:
Figure 1 is a perspective view of a luggage carrier, in the embodiment using configuration varying means comprising two screw tie rods and mounted on the rear door of a vehicle;
Figure 2 is a side view of the luggage carrier in Figure 1;
Figure 3 is a perspective view of a luggage carrier, in the embodiment using configuration varying means comprising a single screw tie rod and mounted on the rear door of a vehicle;

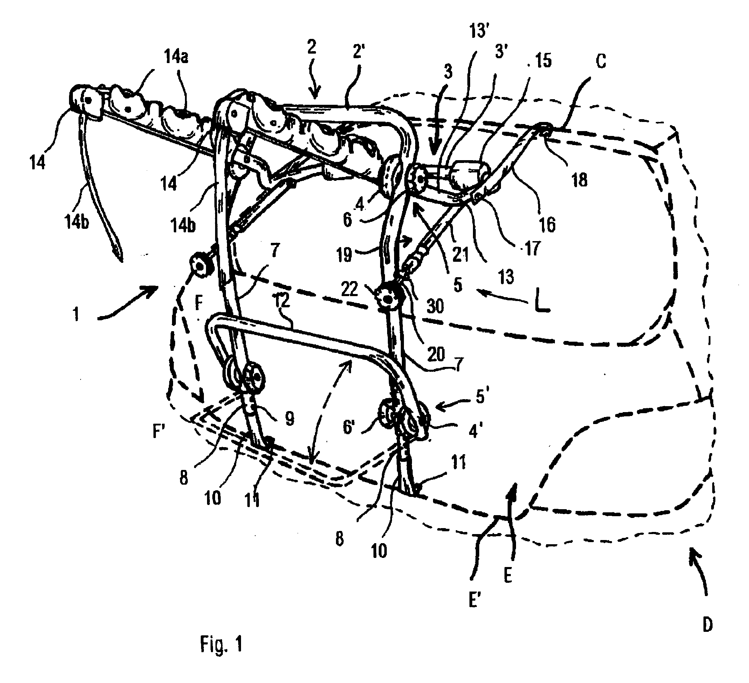

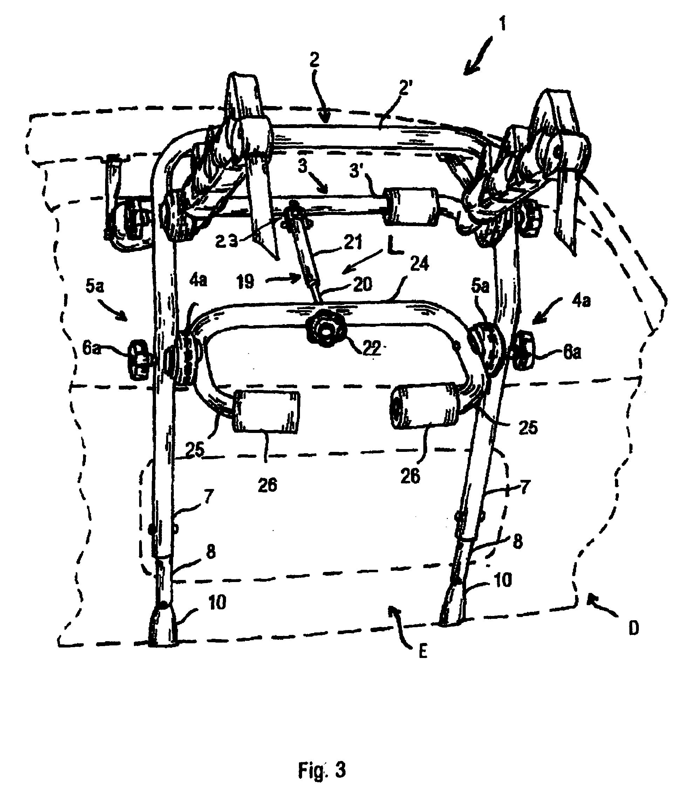

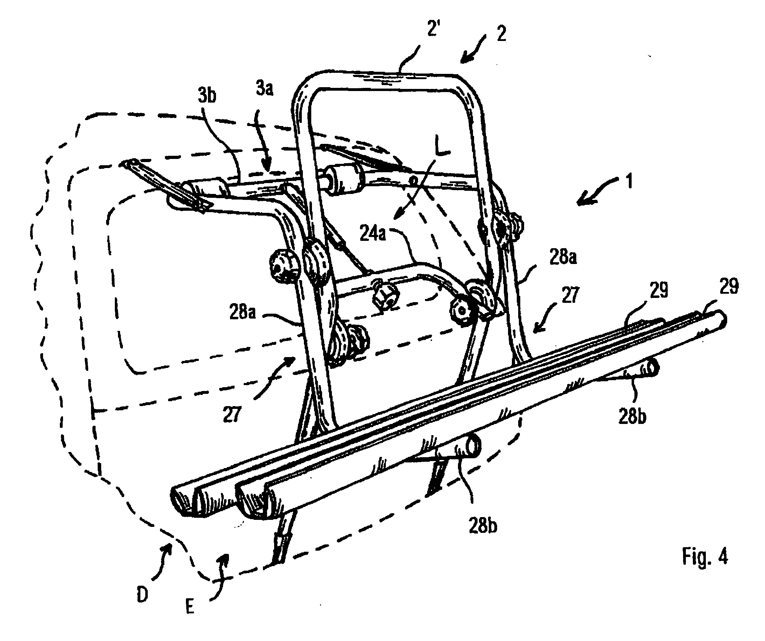

Figure 4 is a perspective view of a luggage carrier, like that of Figure 3, but with a different load supporting apparatus. The Figure 1 shows a luggage carrier 1 mounted at the rear end of a vehicle D, represented by dashed line, and comprising a frame body 2 and a further frame body 3. The frame body 2 comprises a U-shaped portion 2', whose two ends extend over two arms 7, each of which is provided with an extractable portion 8, provided with through holes 9; once the luggage carrier 1 has been assembled, the U-shaped portion 2' shows the arms 7 turned downwards; between the U-shaped portion 2' and the arms 7 there is defined an obtuse angle G, not shown. The U-shaped portion 2' contains, near each one of its parallel sides, a hinge 5 with a possible clutch 4, the latter comprising a pair of discs and a knob 6 suitable for tightening a disc against the opposed disc. The hinge 5 is interposed between the frame body 2 and the further frame body 3, and said hinge 5 enables said frame bodies to be angularly adjusted each other.

The extractable portion 8 can be received for a longer or shorter portion of its length into the arm 7 and can be fixed at the preset position by means of a bolt, not shown, suitable for being positioned at one of the through holes 9. Thus, the length of every arm 7 can be changed and in particular can be made suitable for being mounted on portions of the vehicle that, due to their extend, would be otherwise unreachable.

The extractable portion 8 further comprises an anchoring appendage 10, terminating with a curved end 11 suitable for coupling with a bottom edge E' of the rear door E or a boot lid, not shown, of the vehicle D.

Near the ends of the arms 7 adjacent to the rear bumper (not shown) of the vehicle D, there is placed a C-shaped element 12, arranged so as to have its longer rectilinear portion facing in the opposed direction with respect to the rear door E. The C-shaped element 12 engages with each of the arms 7 by means of a further hinge 5', comprising a further clutch 4' and a further knob 6'. The hinge 5' enables the C-shaped element 12 to be moved from a retracted position F to an extended position F', represented by a dashed line. That enables to prevent that a particularly voluminous object mounted on the luggage carrier, for example a bicycle, can accidentally hit and then damage the surface of the rear door E or of the rear bumper, not shown, of the vehicle D.

The further frame body 3, as depicted in the Figures 1 to 3, shows a further U-shaped portion 3', whose two ends continue to two brackets 13', through two curved portions 13. Each of the brackets 13' defines with the U-shaped portion 3' a further obtuse angle G', not shown. Each of the brackets 13' further contains a set of grooves 14a, suitable for being used advantageously as a rack 14 whereon bicycles, having frame provided with central crossbar, can be received. With the rack 14 there is associated a tightening tape 14b suitable for holding in position the frame crossbar, received in every groove 14a.

The hinges 5 lie arranged at the intersection between the two portions of the further frame body 3 that are contained between the two curved sections 13 and the two racks 14.

The further frame body 3 accommodates in its further U-shaped portion 3' at least a resting element 15, preferably in form of resilient cylinder having smooth surface; by means of the resting element 15 the further frame body 3 can be applied on the read door E without damaging the external surface of the latter.

Near the border between the further U-shaped portion 3' and each one of the bracket 13', an elastic belt 16 is fixed to the further frame body 3 by means of a bolt 17. A free end of the elastic belt 16 comprises a further curved end 18, suitable for anchoring on an upper edge C of the rear door E or the boot lid (not shown) of the vehicle D.

With reference to Figure 4, an embodiment of the luggage carrier 1 is provided, wherein the further frame body 3a comprises another further U-shaped portion 3b extending, at both the ends, over an L-shaped loading element 27. Each one of the L-shaped loading elements 27 comprises a vertical bar 28a and a horizontal bar 28b, mutually connected at right angle. Each one of the vertical arms 28a engages with the frame body 2 by means of the hinge 5 previously described. The two horizontal bars 28b receive a pair of profiled elements 29, orthogonally arranged with respect to said horizontal bars 28b and having a roughly C-shaped section. With such advantageous version of the luggage carrier 1 bicycles can also be transported with frame unprovided with central crossbar, such as for example the ladies' bicycles.

The frame body 2 and the further frame body 3 are further connected by means of a configuration varying device L. With reference to Figure 1, such configuration varying device L comprises a pair of screw tie rods 19. Each one of the screw tie rods 19 comprises an adjusting screw 20 received into an internal thread or sleeve 21; the end of the adjusting screw 20, lying outside the sleeve 21, is further connected to a knob 22.

The end of each screw tie rod 19 comprising the knob 22 is connected with the frame body 2 near the arm 7 at its own side. The end of the screw tie rod 19 opposing that one comprising the knob 22 is connected with the further frame body 3 near the vertex of the obtuse angle G' defined between the curved section 13 and the further U-shaped portion 3'. All said connections are obtained by means of further bolts 30. In the luggage carrier 1 so assembled, an angle H results included between the frame body 2 and the further frame body 3.

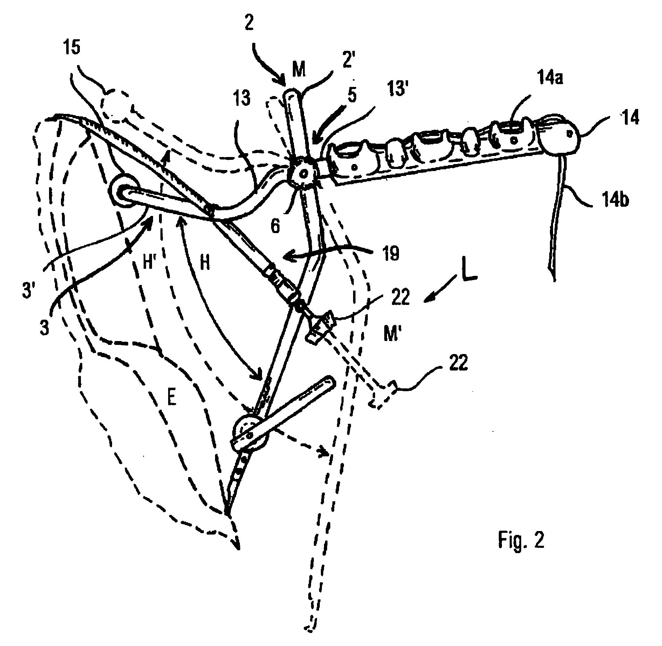

By acting on the knobs 22 of the configuration varying device L (see Figure 2) and then on the adjusting screw 20, the configuration of the luggage carrier 1 can be varied so as to be brought from any open starting position M', indicated by means of a dashed line, to a mounting position M, indicated by means of a full line, or vice versa.

Thus, the screw tie rod 19 is shortened, or respectively extended, so as to transform the angle H, into a further angle H', respectively smaller or greater than H. Such angular movement enables the configuration of the luggage carrier 1 to be varied, so as to be modified according to the size and the shape of the rear door E. In order to reduce the angle H to a further angle, not shown, smaller than H, it is sufficient to tighten the adjusting screw 20, so that shortening of the screw tie rod 19 is obtained. The possibility of properly fitting the configuration of the luggage carrier 1 to a plurality of shapes and sizes of vehicles results apparent by simply acting on the screw tie rod 19. In addition, the arrangement of the screw tie rod 19 is such to make said screw tie rod 19 easy to be handled by the user.

With reference to the Figures 3 and 4, it is possible to carry out the configuration adjusting device L so as to comprise a single screw tie rod 19. The end of the screw tie rod 19 opposed to the knob 22 is constrained near the middle region of the further U-shaped portion 3' of the further frame body 3 by means of a fork joint 23. The end of the adjusting screw 20 comprising the knob 22 passes through the thickness of a further C-shaped element 24, oriented so as to have the longer rectilinear side bordering the rear door E and comprising two end segments 25, each one accommodating a supporting element 26, implemented in a similar manner as the resting elements 15 previously described.

The end segments 25 operate so as to maintain the load in a stable position during the motion of the vehicle D and to prevent the accidental contact thereof with the external surface of the rear door E. The supporting elements 26 prevent the occurrence of possible damages for the transported objects. The further C-shaped element 24 is connected with the arms 7 of the rod element 2 by means of a pair of further other hinges 5a, each of which comprises a further other knob 6a and a further other clutch 4a. With reference to the Figure 4, in the version of the luggage carrier 1 equipped by using the further frame body 3a, the further C-shaped element 24 is replaced by another further C-shaped element 24a. Such another further C-shaped element 24a is unprovided with end segments 25 and further supporting elements 26, since the load accommodated on the luggage carrier 1 is firmly positioned on the L-shaped element 27 included in the other further frame body 3a, and such positioning prevents per se the contact of the load with the external surface of the rear door E of the vehicle D.

## Claims

1. Apparatus for transporting loads, suitable for being mounted on a vehicle (D), comprising a frame (2, 3) having first frame body (2) and second frame body (3) that are mutually coupled by means of hinge means (5) and are arranged for being associated with opposed edges (C, E') of a portion (E) of a vehicle (D), configuration varying means (L) interconnecting said first frame body (2) and said second frame body (3) and arranged for varying the mutual angular position of said first frame body (2) and said second frame body (3) so as to enable a stable anchoring to said vehicle (D), **characterized in that** said configuration varying means (L) is positioned at a fixed distance from said hinge means (5) so that, by acting on said configuration varying means (L), it is possible to reduce, or to increase, an angle (H) defined between said first frame body (2) and said second frame body (3) when said apparatus is mounted on, or respectively removed from, said vehicle (D), said configuration varying means (L) being such that it enables to obtain that the geometric configuration of said frame (2, 3) is adjusted by only acting on said configuration varying means (L), i.e. without having to operate on the individual position of the first frame body (2) and the second frame body (3).

2. Apparatus according to claim 1, wherein said configuration varying means (L) comprises tie rod means (19).

3. Apparatus according to claim 2, wherein said tie rod means (19) comprises a single tie rod (19) arranged in intermediate position with respect to said first frame body (2).

4. Apparatus according to claim 3, wherein said single tie rod (19) is arranged so as to pass through C-shaped load spacing means (24) associated with said first frame body (2).

5. Apparatus according to any one of claims 2 to 4, wherein said tie rod means (19) comprises a pair of tie rod means (19) laterally arranged with respect to said first frame body (2).

6. Apparatus according to claim 2, wherein said tie rod means (19) comprises screw means (20) supported to said first frame body (2), suitable for being manually actuated, and engaged with internal thread means (21) supported to said second frame body (3).

7. Apparatus according to any preceding claim, wherein said second frame body (3) comprises an U-shaped portion (3'), each end of which extends to a corresponding bracket means (13') through a curved portion (13).

8. Apparatus according to claim 7, wherein rack means (14) is obtained in said bracket means (13').

9. Apparatus according to claim 6, wherein in said second frame body (3) a further U-shaped portion (3b) is provided, each free end of which extends to L-shaped loading means (27) comprising vertical bar means (28a) and horizontal bar means (28b) that are mutually connected at an angle.

10. Apparatus according to claim 9, wherein said horizontal bar means (28b) carries profiled means (29), transversally arranged with respect to said horizontal bar means (28b).

11. Apparatus according to any preceding claim, wherein said first frame body (2) comprises arm means (7).

12. Apparatus according to any preceding claim, wherein said arm means (7) comprises telescopic portion means (8).

13. Apparatus according to claim 11, or 12, wherein said arm means (7) supports, in adjustable manner, end regions of C-shaped load spacing means (12).

## Patentansprüche

1. Vorrichtung zum Transportieren von Lasten, die zur Befestigung an einem Fahrzeug (D) geeignet ist, mit einem Rahmen (2, 3), der einen ersten Rahmenkörper (2) und einen zweiten Rahmenkörper (3) hat, die über Gelenkmittel (5) miteinander gekoppelt und so angeordnet sind, dass sie gegenüberliegenden Kanten (C, E') eines Teils (E) eines Fahrzeugs (D) zugeordnet werden können, mit Aufbau-variierenden Mitteln (L), die den ersten Rahmenkörper (2) und den zweiten Rahmenkörper (3) miteinander verbinden, und die angeordnet sind, um die winklige Position des ersten Rahmenkörpers (2) und des zweiten Rahmenkörpers (3) zueinander zu variieren, um so eine stabile Verankerung an das Fahrzeug (D) zu ermöglichen, **dadurch gekennzeichnet, dass** die Aufbau-variierenden Mittel (L) in einem festen Abstand von den Gelenkmitteln (5) angeordnet sind, so dass es durch Einwirken auf die Aufbau-variierenden Mittel (L) möglich ist, einen zwischen dem ersten Rahmenkörper (2) und dem zweiten Rahmenkörper (3) definierten Winkel (H) zu verkleinern oder zu vergrößern, wenn die Vorrichtung an dem Fahrzeug (D) befestigt oder entsprechend davon entfernt ist, wobei die Aufbau-variierenden Mittel (L) derart sind, dass sie es erlauben, dass der geometrische Aufbau des Rahmens (2, 3) nur durch Betätigen der genannten Aufbau-variierenden Mittel (L) angepasst werden kann, d.h., ohne dass auf die individuellen Positionen des ersten Rahmenkörpers (2) und des zweiten Rahmenkörpers (3) eingewirkt werden muss.

2. Vorrichtung nach Anspruch 1, wobei die Aufbau-variierenden Mittel (L) Spannstabmittel (19) aufweisen.

3. Vorrichtung nach Anspruch 2, wobei die Spannstabmittel (19) einen einzelnen Spannstab (19) aufweisen, der in Bezug auf den ersten Rahmenkörper (2) in einer zwischengelagerten Position angeordnet ist.

4. Vorrichtung nach Anspruch 3, wobei der einzelne Spannstab (19) derart angeordnet ist, dass er durch C-förmige Lastbeabstandungsmittel (24) hindurchführt, die mit dem ersten Rahmenkörper (2) verbunden sind.

5. Vorrichtung nach einem der Ansprüche 2 bis 4, wobei die Spannstabmittel (19) ein Paar von Spannstabmitteln (19) aufweisen, die in Bezug auf den ersten Rahmenkörper (2) seitlich angeordnet sind.

6. Vorrichtung nach Anspruch 2, wobei die Spannstabmittel (19) Schraubmittel (20) aufweisen, die am ersten Rahmenkörper (2) gehalten werden, für eine manuelle Betätigung geeignet sind und mit inneren Gewindemitteln (21) zusammenwirken, die am zweiten Rahmenkörper (3) gehalten werden.

7. Vorrichtung nach einem der vorhergehenden Ansprüche, wobei der zweite Rahmenkörper (3) einen U-förmigen Abschnitt (3') aufweist, von dem sich jedes Ende über einen gekrümmten Bereich (13) zu entsprechenden Haltemitteln (13') erstreckt.

8. Vorrichtung nach Anspruch 7, wobei Gestellmittel (14) in den Haltemitteln (13') enthalten sind.

9. Vorrichtung nach Anspruch 6, wobei in dem zweiten Rahmenkörper (3) ein weiterer U-förmiger Abschnitt (3b) vorgesehen ist, von dem sich jedes seiner freien Enden zu L-förmigen Lademitteln (27) erstreckt, die vertikale Stangenmittel (28a) und horizontale Stangenmittel (28b) aufweisen, die unter einem Winkel miteinander verbunden sind.

10. Vorrichtung nach Anspruch 9, wobei die horizontalen Stangenmittel (28b) profilierte Mittel (29) tragen, die in Bezug auf die horizontalen Stangenmittel (28b) quer angeordnet sind.

11. Vorrichtung nach einem der vorhergehenden Ansprüche, wobei der erste Rahmenkörper (2) Armmittel (7) aufweist.

12. Vorrichtung nach einem der vorhergehenden Ansprüche, wobei die Armmittel (7) Mittel (8) mit einem teleskopischen Abschnitt aufweisen.

13. Vorrichtung nach Anspruch 11 oder 12, wobei die Armmittel (7) in einer einstellbaren Art und Weise Endbereiche von C-förmigen Lastbeabstandungsmitteln (12) tragen.

## Revendications

1. Dispositif pour le transport de charges, adapté à un montage sur un véhicule (D), comprenant un cadre (2, 3) ayant un premier corps (2) de cadre et un deuxième corps (3) de cadre qui sont mutuellement accouplés par des moyens de charnière (5) et sont agencés pour être associés à des bords opposés (C, E') d'une portion (E) d'un véhicule (D), des moyens (L) de modification de configuration reliant ledit premier corps (2) de cadre et ledit deuxième corps (3) de cadre et agencés pour modifier la position angulaire mutuelle dudit premier corps (2) de cadre et dudit deuxième corps (3) de cadre afin de permettre un ancrage stable sur ledit véhicule (D), ***caractérisé en ce que*** lesdits moyens (L) de modification de configuration sont positionnés à une distance fixe desdits moyens de charnière (5) afin que, en agissant sur lesdits moyens (L) de modification de configuration, il soit possible de réduire, ou d'augmenter, un angle (H) défini entre ledit premier corps (2) de cadre et ledit deuxième corps (3) de cadre lorsque ledit dispositif est monté sur le, ou respectivement retiré du, dit véhicule (D), lesdits moyens (L) de modification de configuration étant aptes à permettre d'obtenir que la configuration géométrique dudit cadre (2, 3) soit réglée en agissant simplement sur lesdits moyens (L) de modification de configuration, c'est-à-dire sans avoir à agir sur la position individuelle du premier corps (2) de cadre et dudit deuxième corps (3) de cadre.

2. Dispositif selon la revendication 1, dans lequel lesdits moyens (L) de modification de configuration comprennent des moyens de tige de raccordement (19).

3. Dispositif selon la revendication 2, dans lequel lesdits moyens de tige de raccordement (19) comprennent une tige de raccordement unique (19) placée dans une position intermédiaire par rapport audit premier corps (2) de cadre.

4. Dispositif selon la revendication 3, dans lequel ladite tige de raccordement unique (19) est agencée de manière à traverser des moyens (24) d'espacement de la charge en forme de C, associés audit premier corps (2) de cadre.

5. Dispositif selon l'une quelconque des revendications 2 à 4, dans lequel lesdits moyens de tige de raccordement (19) comprennent une paire de moyens de tige de raccordement (19) agencés latéralement par rapport audit premier corps (2) de cadre.

6. Dispositif selon la revendication 2, dans lequel lesdits moyens de tige de raccordement (19) comprennent des moyens de vis (20) supportés par ledit premier corps (2) de cadre, adaptés pour être actionnés manuellement, et engagés avec des moyens de filetage interne (21) supportés par ledit deuxième corps (3) de cadre.

7. Dispositif selon l'une quelconque des revendications précédentes, dans lequel ledit deuxième corps (3) de cadre comprend une portion (3') conformée en U, dont chaque extrémité s'étend jusqu'à un moyen de console correspondant (13') par l'intermédiaire d'une portion incurvée (13).

8. Dispositif selon la revendication 7, dans lequel des moyens de râtelier (14) sont obtenus dans lesdits moyens de console (13').

9. Dispositif selon la revendication 6, dans lequel, dans ledit deuxième corps (3) de cadre, une portion (3b) supplémentaire en forme de U est présente, dont chaque extrémité libre s'étend jusqu'à des moyens de chargement (27) en L comprenant des moyens de barre verticale (28a) et des moyens de barre horizontale (28b) qui sont reliés entre eux en angle.

10. Dispositif selon la revendication 9, dans lequel lesdits moyens de barre horizontale (28b) portent des moyens profilés (29) agencés transversalement par rapport auxdits moyens de barre horizontale (28b).

11. Dispositif selon l'une quelconque des revendications précédentes, dans lequel ledit premier corps (2) de cadre comprend des moyens de bras (7).

12. Dispositif selon l'une quelconque des revendications précédentes, dans lequel lesdits moyens de bras (7) comprennent des moyens de portion télescopique (8).

13. Dispositif selon la revendication 11 ou 12, dans lequel lesdits moyens de bras (7) supportent, de manière réglable, les zones d'extrémité des moyens (12) d'écartement de la charge en forme de C.
